Europäisches Patentamt

(19) European Patent Office  (11) Publication number: **0 027 137**

Office européen des brevets  **B1**

(12) **EUROPEAN PATENT SPECIFICATION**

(45) Date of publication of patent specification: **28.09.83**  (51) Int. Cl.³: **H 04 L 9/02**

(21) Application number: **80900902.0**

(22) Date of filing: **04.04.80**

(86) International application number:
**PCT/US80/00364**

(86) International application number:
**PCT/US80/00364**

(87) International publication number:
**WO 80/02349 30.10.80 Gazette 80/25**

(54) **APPARATUS FOR ENCIPHERING AND/OR DECIPHERING DATA SIGNALS.**

(30) Priority: **16.04.79 US  30252**

(43) Date of publication of application:
**22.04.81 Bulletin 81/16**

(45) Publication of the grant of the patent:
**28.09.83 Bulletin 83/39**

(84) Designated Contracting States:
**CH DE FR GB LI**

(56) References cited:
**GB - A - 1 120 032**
**US - A - 3 614 316**
**US - A - 3 657 699**
**US - A - 3 728 529**
**US - A - 3 784 743**
**US - A - 3 796 830**
**US - A - 3 911 216**
**US - A - 3 988 538**
**US - A - 4 115 657**
**US - A - 4 202 051**

(73) Proprietor: **NCR Corporation**
**World Headquarters**
**Dayton Ohio 45479 (US)**

(72) Inventor: **OOSTERBAAN, DuWayne Dale**
**2214 Village Road**
**Escondido, CA 92026 (US)**
Inventor: **WILLIAMS, Gerard John**
**26984 Banbury Drive**
**Valley Center, CA 92082 (US)**

(74) Representative: **Robinson, Robert George**
**International Patent Department NCR Limited 206**
**Marylebone Road**
**London NW1 6LY (GB)**

Courier Press, Leamington Spa, England.

Apparatus for enciphering and/or deciphering data signals

Technical field

This invention relates to apparatus for enciphering and/or deciphering data signals.

Background art

Data communication over unsecured communication links such as telephone lines is subject to detection and modification with a possible end result being the loss of a preferred position. In order to reduce the risk of a compromise of a transmitted data message, various forms of enciphering the message have been devised. Once the data is enciphered, it is still not necessarily secure from unauthorized access. If the code used in the enciphering process is relatively simplistic, it is just a matter of trial and error before the code is broken and unauthorized access is gained. In order to be secure from deciphering attempts, which attempts now take advantage of the high power available in large-scale computers, it is necessary to make, for example, the trial and error process extremely long and complicated which in turn makes the attempt financially unsound. It is of course the ultimate goal to encipher data signals in such a manner that deciphering by unauthorized means is impossible even with an unlimited budget of time and computing power.

In enciphering data signals, the use of one or more pseudo-random bit generators is known as a means for generating a cipher which appears random. U.S. Patent 3,911,216 discloses configurations of pseudo-random bit generators in enciphering apparatus wherein outputs from one bit generator are applied as inputs to another bit generator. The output from the bit generators is combined with a data signal to provide an enciphered data signal. Although such enciphered data signal is difficult to decipher, for some applications even greater security may be desirable.

Disclosure of the invention

It is an object of the present invention to provide improved apparatus for enciphering and/or deciphering data signals wherein the risk of unauthorized deciphering of data signals is particularly low.

The present invention provides apparatus for enciphering and deciphering data signals, including first and second pseudo-random bit generators, characterized by logic means operative in an enciphering mode for combining the output signal of each of said bit generators respectively with a data input signal and for applying the respective combined signal to the input of the other one of said generators, and operative in a deciphering mode for combining the output signal of each of said bit generators respectively with an enciphered data input signal and for applying the respective combined signal to the input of the respective bit generator, and combining means operative in each mode of operation for combining the relevant data input signal and the output signals of said bit generators to provide an enciphered data signal in the enciphering mode of operation or a deciphered data signal in the deciphering mode of operation.

The present invention extends to apparatus for enciphering data signals, including first and second pseudo-random bit generators, characterized by means for combining the output signal of each of said bit generators respectively with a data input signal and for applying the respective combined signal to the input of the other one of said bit generators, and means for combining said data signal and the output signals of said bit generators to provide an enciphered data signal.

The present invention also extends to apparatus for deciphering data signals, including first and second pseudo-random bit generators, characterized by means for combining the output signal of each of said bit generators respectively with an enciphered data input signal and for applying the respective combined signal to the input of the respective bit generator, and means for combining said enciphered data input signal and the output signals of said bit generators to provide a deciphered data signal.

By employing, in accordance with the invention pseudo-random bit generators for enciphering data wherein the input to one generator is determined by the data input signal combined with the output of the other generator, the resultant cipher is complex and extremely difficult to decipher by unauthorized persons.

Since, in enciphering data signals, the output of each pseudo-random bit generator determines in part the input to the other generator, the generators can be said to be cross-coupled. In deciphering data signals, the output signal of each generator determines in part the input to the respective generator, and the generators can be said to be connected in a feedback configuration.

Preferably each of said pseudo-random bit generators of an apparatus in accordance with the invention is implemented to satisfy a polynomial, preferably a primitive polynomial.

The following two polynomials are examples of primitive polynomials which may be used:

$$X^{16}+X^{12}+X^{11}+X^9+X^8+X^4+X^3+X^2+1;$$
$$X^{16}+X^{12}+X^3+X+1.$$

An initializing key comprised of a series of arbitrarily-chosen bits having an arbitrarily-chosen length is directed to the cross-coupled pseudo-random bit generators in the enciphering mode prior to receipt of the clear text data signal. The bit generators respond to the bit sequence of the key by setting to an initializing state. The initialized state of the bit generators is also established prior to the receipt of an enciphered signal in order to ensure accurate deciphering.

The pseudo-random bit generators may comprise shift registers connected in a known feedback manner for generating pseudo-random bit signals, each register having an input, an output and a preset input for receiving a preset signal to set the register to a present condition.

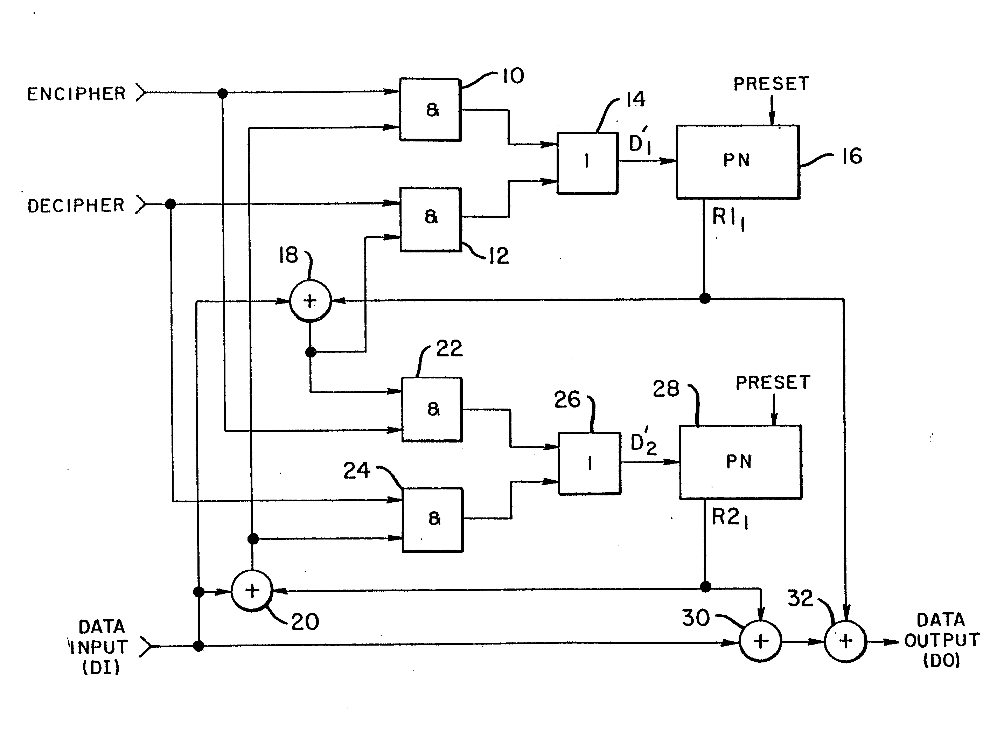

Brief description of the drawing

One embodiment of the invention will now be described with reference to the accompanying drawing which is a schematic logic diagram of apparatus for enciphering and deciphering data signals.

Best mode for carrying out the invention

Referring to the drawing, the apparatus shown therein includes an ENCIPHER terminal, so labeled, which is operatively connected to the gating input of AND gate 10 and of AND gate 22. A DECIPHER terminal, so labeled, is operatively connected to the gating input of AND gate 12 and of AND gate 24. A data input terminal, so labeled, is operatively connected by means of a summing junction 18 to the gated input of AND gate 12 and of AND gate 22 and by means of a summing junction 20 to the gated input of AND gate 24 and of AND gate 10. The outputs of AND gates 10 and 12 are connected to the inputs of an OR gate 14. The output of OR gate 14 is denoted as D'1, signalwise, and is coupled to the input of a pseudo-random bit sequence generator 16, herein referred to as a PN generator. The outputs of AND gates 22 and 24 are operatively connected to the input of OR gate 26. The output of OR gate 26 is denoted as D'2, signalwise, and is coupled to the input of a PN generator 28. The output of PN generator 16, denoted R1$_1$, is directed to an input of the summing junction 18 and to an input of a summing junction 32. The output of the PN generator 28 denoted R2$_1$ is directed to a summing input of the summing junction 20 and to a summing input of a summing junction 30. The summed output from summing junction 30 is directed to a summing input of the summing junction 32. The output of the summing junction 32 is the apparatus output, denoted DO. The data input terminal labeled DI is operatively connected to a summing input of summing junctions 18, 20 and 30. In the preferred embodiment of the invention, the PN generators 16 and 28 are each 16-bit shift registers which are connected in the well-known feedback method to implement the following primitive polynomials:

(Gen. 16) $X^{16}+X^{12}+X^{11}+X^9+X^8+X^4+$
$X^3+X^2+1$
(Gen. 28) $X^{16}+X^{12}+X^3+X+1$

The above polynomials receive more detailed attention in the publication entitled: "Error-Correcting Codes" by Peterson, MIT Press, copyright 1961, page 261. The summing junctions 18, 20, 30 and 32 may be EXCLUSIVE-OR gates which perform binary addition.

In operation, the PN generators 16 and 28 are initialized to a predetermined state by the application of a preset signal to the preset input. An ENCIPHER mode select signal, for example a binary 1 level signal, is applied to the ENCIPHER terminal and a signal of opposite level, i.e., a binary 0 is applied to the DECIPHER terminal. The binary 1 level signal on the inputs of AND gates 10 and 22 enable these gates. The binary 0 level signal on the inputs of AND gates 12 and 24 disables these gates.

A sequence of bit signals, of arbitrary length, referred to as a key bit stream, is applied to the data input terminal. The data bits of the key bit stream are summed on a bit-by-bit basis with the output bits from a respective PN generator, by the respective summing junction 18 or 20. Identifying the signal on the data input terminal as DI, and the signal on the data output terminal as DO the following equations set forth the logic state of the signals into the PN generator 16 and 28 and the signals present at the output:

| ENCIPHER mode | DECIPHER mode |
|---|---|
| 1. $DO=DI \oplus R1_1 \oplus R2_1$ | 1. $DO=DI \oplus R1_1 \oplus R2_1$ |
| 2. $D'_1=DI \oplus R2_1$ | 2. $D'_1=DI \oplus R1_1$ |
| 3. $D'_2=DI \oplus R1_1$ | 3. $D'_2=DI \oplus R2_1$ |

In the ENCIPHER mode the output bits R1$_1$ from the PN generator 16 are summed with the clear text data signal D1 in the summing junction 18 and are directed as the input D'$_2$ of the PN generator 28 via AND gate 22 and OR gate 26.

In a like manner, the output bits R2$_1$ from the PN generator 28 are summed with the clear text data signal D1 in the summing junction 20 and directed as the input D'1 of the PN generator 16 via AND gate 10 and OR gate 14.

The summing junction 30, in the ENCIPHER mode, combines the clear text bit stream with the pseudo-random bit sequence from PN generator 28, on a bit-by-bit basis to provide a partially encoded bit sequence. Summing junction 32 combines the partially encoded bit sequence with the pseudo-random bit sequence from PN generator 16, on a bit-by-bit basis to provide the completed enciphered signal, DO, to the data output terminal.

To convert from the ENCIPHER mode to the DECIPHER mode it is first necessary to initialize the PN generators 16 and 28. This is accomplished by applying a preset signal to their PRESET inputs, During initialization an enabling signal is applied to the ENCIPHER input and a disabling signal is applied to the DECIPHER input. The key bit sequence is applied to the data input terminal to drive the PN generators, 16 and 28, to their predetermined states.

To decipher an enciphered signal an enabling signal, logic level 1, is applied to the DECIPHER input terminal, for effecting the enablement of gates 12 and 24. A disabling signal, logic level 0, is applied to the ENCIPHER labeled input terminal for effecting the disablement of gates 10 and 22.

With gates 10 and 22 disabled the cross-coupling connections of PN generators 16 and 18 are terminated. The enabling of gates 12 and 24 effectively connects the output of each PN generator to its respective input in a feed-back configuration.

The signal to be deciphered D1 is applied to the data input terminal. The inputs to summing junctions 18, 20 and 30 each receive the to-be-deciphered signal. The to-be-deciphered signal is combined with the output bits present at the output of PN generators 16 and 28 and the combined signal is directed to the inputs of the respective PN generators. The signal at the input of each PN generator determines the next state of the PN generator output signal.

The to-be-decoded signal is combined on a bit-by-bit basis first with the output of PN generator 28, in summing junction 30, the combined signal then being combined with the output of PN generator 16. This combining results in a decoding of the enciphered signal to provide at the data output terminal the clear text data signal. It should be understood that since the signal to be deciphered D1 is equivalent to the signal $D_0$ in the enciphering mode the feed-back connections of PN generators 16, 28 act to ensure that, in the deciphering mode, the same signals exist at the inputs of generators 16, 28 as exist in the enciphering mode, thereby, causing correct decoding.

Further encoding may be accomplished by connecting in cascade the data output terminal of a first encoding and decoding apparatus to the data input of a second encoding and decoding apparatus.

The same or a different key bit sequence could be utilized to initialize the PN generators of the first and the second encoding and decoding apparatus.

It will be appreciated that the apparatus described above with reference to the accompanying drawing will encipher a string of data independent of the length of the string. Other features of the apparatus are that the next state of the apparatus is partially determined by the state of input data bits, that the key is destroyed after the data is enciphered and that the key may be any arbitrarily chosen bit stream.

## Claims

1. Apparatus for enciphering data signals, including first and second pseudo-random bit generators (16, 28) characterized by means (10, 14, 18, 20, 22, 26) for combining the output signal ($R1_i$; $R2_i$) of each of said bit generators respectively with a data input signal (D1) and for applying the respective combined signal (D'2; D'1) to the input of the other one of said bit generators, and means (30, 32) for combining said data signal (D1) and the output signals ($R1_i$; $R2_i$) of said bit generators to provide an enciphered data signal (DO).

2. Apparatus for deciphering data signals, including first and second pseudo-random bit generators (16, 28), characterized by means (12, 14, 18, 20, 24, 26) for combining the output signal ($R1_i$; $R2_i$) of each of said bit generators respectively with an enciphered data input signal (D1) and for applying the respective combined signal (D'1; D'2) to the input of the respective bit generator; and means (30, 32) for combining said enciphered data input signal (D1) and the output signals ($R1_i$; $R2_i$) of said bit generators to provide a deciphered data signal (DO).

3. Apparatus for enciphering and deciphering data signals, including first and second pseudo-random bit generators (16, 28), characterized by logic means (10, 12, 14, 18, 20, 22, 24, 26) operative in an enciphering mode for combining the output signal ($R1_i$; $R2_i$) of each of said bit generators respectively with a data input signal (D1) and for applying the respective combined signal (D'2; D'1) to the input of the other one of said generators, and operative in a deciphering mode for combining the output signal ($R1_i$; $R2_i$) of each of said bit generators respectively with an enciphered data input signal (D1) and for applying the respective combined signal (D'1; D'2) to the input of the respective bit generator, and combining means (30, 32) operative in each mode of operation for combining the relevant data input signal (D1) and the output signals ($R1_i$; $R2_i$) of said bit generators to provide an enciphered data signal (DO) in the enciphering mode of operation, or a deciphered data signal (DO) in the deciphering mode of operation.

4. Apparatus according to claim 3, characterized in that said logic means includes first and second summing means (18, 20) having first inputs respectively connected to the outputs of said first and second bit generators (16, 28), second inputs for receiving a data input signal, and outputs coupled to gating means (10, 12, 14, 22, 24, 26), said gating means being operative in said deciphering mode to connect the outputs of said first and second summing means (18, 20) to the inputs of said first and second bit generators respectively, and being operative in said enciphering mode to connect the outputs of said first and second summing means to the inputs of said second and first bit generators respectively.

5. Apparatus according to claim 4, characterized in that said combining means (30, 32) includes third and fourth summing means, each of said third and fourth summing means having an input connected to the output of a respective one of said bit generators, said third summing means (30) having a second input connected to receive a data input signal, and a second input of said fourth summing means (32) being connected to the output of said third summing means to provide at the output of said fourth summing means the enciphered or deciphered data signal.

6. Apparatus according to claim 4, characterized in that said gating means includes first and second AND gates (10, 22) responsive to an enciphering mode signal for connecting the outputs of said first and second summing means (18, 20) to the inputs of said second and first bit generators (28, 16) respectively, and third and fourth AND gates (12, 24) responsive to a deciphering mode signal for connecting the outputs of said first and second summing means (18, 20) to the inputs of said first and second bit generators (16, 28) respectively, the outputs of said first and third AND gates (10, 12) being connected to the input of said first bit generator (16) via a first OR gate (14), and the outputs of said second and fourth AND gates (22, 24) being connected to the input of said second bit generator (28) via a second OR gate (26).

7. Apparatus according to claim 5, characterized in that each of said summing means is an EXCLUSIVE-OR gate.

8. Apparatus according to any one of the preceding claims, characterized in that each of said first and second bit generators (16, 28) is a shift register having an input, an output and a preset input for receiving a preset signal to set the register to a preset condition.

## Patentansprüche

1. Gerät zum Verschlüsseln von Datensignalen mit einem ersten und zweiten Pseudo-Zufalls-Bitgenerator (26, 28) gekennzeichnet durch Mittel (10, 14, 18, 20, 22, 26) zum Kombinieren des Ausgangssignals ($R1_i$; $R2_i$) jedes der beiden Bitgeneratoren jeweils mit einem Dateneingangssignal (D1) und zum Anlegen des entsprechenden kombinierten Signals (D'2; D'1) an den Eingang des anderen der Bitgeneratoren, und durch Mittel (30, 32) zum Kombinieren des Datensignals (D1) und der Ausgangssignalen ($R1_i$; $R2_i$) der Bitgeneratoren, um ein verschlüsseltes Datensignal (DO) abzugeben.

2. Gerät zur Entschlüsselung von Datensignalen mit einem ersten und zweiten Pseudo-Zufalls-Bitgenerator (26, 28), gekennzeichnet durch Mittel (12, 14, 18, 20, 24, 26) zum Kombinieren des Ausgangssignals ($R1_i$; $R2_i$) jedes der beiden Bitgeneratoren jeweils mit einem verschlüsselten Dateneingangssignal (D1) und zum Anlegen des entsprechenden kombinierten Signals (D'1; D'2) an den Eingang des entsprechenden Bitgenerators, und durch Mittel (30, 32) zum Kombinieren des verschlüsselten Dateneingangssignals (D1) und der Ausgangs-

signalen ($R1_i$; $R2_i$) der Bitgeneratoren, um ein entschlüsseltes Datensignal (DO) abzugeben.

3. Gerät zum Verschlüsseln und Entschlüsseln von Datensignalen mit einem ersten und zweiten Pseudo-Zufalls-Bitgenerator (16, 28), gekennzeichnet durch logische Mittel (10, 12, 14, 18, 20, 22, 24, 26) die in einer Verschlüsselungsbetriebsart aktiv sind, um das Ausgangssignal ($R1_i$; $R2_i$) jedes der Bitgeneratoren jeweils mit einem Dateneingangssignal (D1) zu kombinieren und das entsprechende kombinierte Signal (D'2; D'1) an den Eingang des anderen der Generatoren anzulegen, und die in einer Entschlüsselungs-Betriebsart aktiv sind zum kombinieren des Ausgangssignals ($R1_i$; $R2_i$) jedes der Bitgeneratoren jeweils mit einem verschlüsselten Dateneingangssignal (D1) und zum Anlegen des entsprechenden kombinierten Signals (D'1; D'2) an den Eingang des entsprechenden Bitgenerators, und durch Kombiniermittel (30, 32), die in jeder Betriebsart aktiv sind, zum Kombinieren des zutreffenden Dateneingangssignals (D1) und der Ausgangssignalen ($R1_i$; $R2_i$) der Bitgeneratoren, um ein verschlüsseltes Datensignal (DO) bei der Verschlüsselungs-Betriebsart oder ein entschlüsseltes Datensignal (DO) bei der Entschlüsselungs-Betreibsart abzugeben.

4. Gerät nach Anspruch 3, dadurch gekennzeichnet, dass die logischen Mittel erste und zweite Summiermittel (18, 20) aufweisen, deren ersten Eingänge entsprechend mit den Ausgängen des ersten und zweiten Bitgenerators (16, 28) verbunden sind, deren zweite Eingänge ein Dateneingangssignal empfangen und deren Ausgänge mit Gattermitteln (10, 12, 14, 22, 24, 26) gekoppelt sind, wobei die Gattermittel in der Entschlüsselungs-Betriebsart aktiv sind, um die Ausgänge der ersten und zweiten Summiermittel (18, 20) mit den Eingängen des ersten bzw. zweiten Bitgenerators zu verbinden, und die während der Verschlüsselungsphase aktiv sind, um die Ausgänge der ersten und zweiten Summiermittel mit den Eingängen des zweiten bzw. ersten Bitgenerators zu verbinden.

5. Gerät nach Anspruch 4, dadurch gekennzeichnet, dass die Kombiniermittel (30, 32) dritte und vierte Summiermittel besitzen, wobei jedes der dritten und vierten Summiermittel einen Eingang besitzt, der mit dem Ausgang eines entsprechenden der Bitgeneratoren verbunden ist, das dritte Summiermittel (30) einen zweiten Eingang besitzt, der zum Empfang eines Dateneingangssignals verbunden ist, und dass ein zweiter Eingang des vierten Summiermittels (32) mit dem Ausgang des dritten Summiermittels verbunden ist, um am Ausgang des vierten Summiermittels ein verschlüsseltes oder entschlüsseltes Datensignal abzugeben.

6. Gerät nach Anspruch 4, dadurch gekennzeichnet, dass die Gattermittel erste und zweite UND-Glieder (10, 22) besitzen, die auf ein Verschlüsselungsarts-Signal zum Verbinden der Ausgänge der ersten und zweiten Summiermittel (18, 20) mit den Eingängen des zweiten
bzw. ersten Bitgenerators (28, 16) ansprechen,
sowie dritte und vierte UND-Glieder (12, 24),
die auf ein Verschlüsselungs-Betriebsart-Signal
zum Verbinden der Ausgänge der ersten und
zweiten Summiermittel (18, 20) mit den Eingängen des ersten bzw. zweiten Bitgenerators
(16, 28) ansprechen, wobei die Ausgänge des
ersten und dritten UND-Gliedes (10, 12) mit
dem Eingang des ersten Bitgenerators (16) über
ein erstes ODER-Glied (14) und die Ausgänge
des zweiten und vierten UND-Gliedes (22, 24)
mit dem Eingang des zweiten Bitgenerators
(28) über ein zweites ODER-Glied (26) verbunden sind.

7. Gerät nach Anspruch 5, dadurch gekennzeichnet, dass jedes Summiermittel ein "ausschliessliches ODER"-Glied ist.

8. Gerät nach einem der vorhergehenden
Ansprüche, dadurch gekennzeichnet, dass jeder
der ersten und zweiten Bitgeneratoren (16, 28)
ein Schieberegister ist mit einem Eingang,
einem Ausgang und einem Voreinstelleingang
zum Empfang eines Voreinstellsignals, mit dem
das Register in einen Voreinstellzustand gestellt
wird.

## Revendications

1. Appareil pour chiffrer des signaux
d'information, comprenant des premier et
second générateurs (16, 28) de bits pseudo-
aléatoires, caractérisé par des moyens (10, 14,
18, 20, 22, 26) pour combiner le signal de
sortie ($R1_1$; $R2_1$) de chacun desdits générateurs
de bits respectivement avec un signal d'entrée
d'information (D1) et pour appliquer le signal
combiné correspondant (D'2; D'1) à l'entrée de
l'autre desdits générateurs de bits, et des
moyens (30, 32) pour combiner ledit signal
d'information (D1) et les signals de sortie ($R1_1$;
$R2_1$) desdits générateurs de bits afin de produire un signal d'information chiffré (DO).

2. Appareil pour déchiffrer des signaux
d'information, comprenant des premier et
second générateurs (16, 28) de bits pseudo-
aléatoires, caractérisé par des moyens (12, 14,
18, 20, 24, 26) pour combiner le signal de
sortie ($R1_1$; $R2_1$) de chacun desdits générateurs
de bits respectivement avec un signal d'entrée
d'information (D1) chiffré et pour appliquer le
signal combiné correspondant (D'2; D'1) à
l'entrée du générateur de bits correspondant, et
des moyens (30, 32) pour combiner ledit signal
d'entrée d'information chiffré (D1) et les
signaux de sortie ($R1_1$; $R2_1$) desdits généra-
teurs de bits afin de produire un signal
d'information déchiffré (DO).

3. Appareil pour chiffrer et déchiffrer des
signaux d'information, comprenant des premier
et second générateurs (16, 28) de bits pseudo-
aléatoires, caractérisé par des moyens logiques
(10, 12, 14, 18, 20, 22, 24, 26) pouvant fonctionner en un mode de chiffrage pour combiner
le signal de sortie ($R1_1$; $R2_1$) de chacun desdits
générateurs de bits respectivement avec un
signal d'entrée d'information (D1) et pour appliquer le signal combiné correspondant (D'2; D'1)
à l'entrée de l'autre desdits générateurs, et pouvant fonctionner en un mode de déchiffrage
pour combiner le signal de sortie ($R1_1$; $R2_1$) de
chacun desdits générateurs de bits respectivement avec un signal d'entrée d'information
chiffré (D1) et pour appliquer le signal combiné
correspondant (D'1; D'2) à l'entrée du générateur de bits correspondant, et des moyens de
combinaison (30, 32) pouvant travailler dans
chaque mode de fonctionnement pour
combiner le signal d'entrée d'information
correspondant (D1) et les signals de sortie ($R1_1$;
$R2_1$) desdits générateurs de bits afin de produire un signal d'information chiffré (DO) dans le
mode de fonctionnement en chiffrage ou un
signal d'information déchiffré (DO) dans le mode
de fonctionnement en déchiffrage.

4. Appareil selon la revendication 3, caractérisé en ce que lesdits moyens logiques
comprennent des premier et second éléments
de sommation (18, 20) ayant des premières
entrées reliées respectivement aux sorties desdits premier et second générateurs de bits (16,
28), des secondes entrées destinées à recevoir
un signal d'entrée d'information, et des sorties
couplées à des moyens de déclenchement (10,
12, 14, 22, 24, 26), lesdits moyens de
déclenchement pouvant fonctionner dans ledit
mode de déchiffrage pour connecter les sorties
desdits premier et second éléments de sommation (18, 20) aux entrées desdits premier et
second générateurs de bits, respectivement, et
pouvant fonctionner dans ledit mode de
chiffrage pour connecter les sorties desdits
premier et second éléments de sommation aux
entrées desdits second et premier générateurs
de bits, respectivement.

5. Appareil selon la revendication 4, caractérisé en ce que lesdits moyens de combinaison (30, 32) comprennent des troisième et
quatrième éléments de sommation, chacun
desdits troisième et quatrième éléments de
sommation comportant une entrée connectée à
la sortie de l'un, respectif, desdits générateurs
de bits, ledit troisième élément de sommation
(30) ayant une seconde entrée connectée de
manière à recevoir un signal d'entrée d'information, et une seconde entrée dudit quatrième élément de sommation (32) étant connectée à la
sortie dudit troisième élément de sommation
pour produire, à la sortie dudit quatrième élément de sommation, le signal d'information
chiffré ou déchiffré.

6. Appareil selon la revendication 4, caractérisé en ce que lesdits moyens de déclenchement comprennent des première et seconde
portes ET (10, 22) qui réagissent à un signal de
mode de chiffrage pour connecter les sorties
desdits premier et second éléments de sommation (18, 20) aux entrées desdits second et premier générateurs de bits (28, 16) respectivement, et des troisième et quatrième portes ET (12, 24) qui réagissent à un signal de mode de déchiffrage pour connecter les sorties desdits premier et second éléments de sommation (18, 20) aux entrées desdits premier et second générateurs de bits (16, 28), respectivement, les sorties desdites première et troisième portes ET (10, 12) étant connectées à l'entrée dudit premier générateur de bits (16) par l'intermédiaire d'une première porte OU (14), et les sorties desdites seconde et quatrième portes ET (22, 24) étant connectées à l'entrée dudit second générateur de bits (28) par l'intermédiaire d'une seconde porte OU (26).

7. Appareil selon la revendication 5, caractérisé en ce que chacun desdits éléments de sommation est une porte OU-EXCLUSIF.

8. Appareil selon l'une quelconque des revendications précédentes caractérisé en ce que chacun desdits premier et second générateurs de bits (16, 28) est un registre à décalage ayant une entrée, une sortie et une entrée de prépositionnement destinée à recevoir un signal de prépositionnement qui place le registre en état de prépositionnement.